# EUROPEAN PATENT APPLICATION

(11) **EP 4 749 778 A1**
(43) Date of publication of application: **27.05.2026**
(21) Application number: 25206052.0
(22) Date of filing: 01.10.2025
(51) Int. Cl.: H01M 50/147, H01M 50/342, H01M 50/375, H01M 50/271

(54) **SECONDARY BATTERY MODULE WITH VENT POTTING PLATE AND METHOD OF MANUFACTURING SAME**

(30) Priority: 20.11.2024 KR 20240166571
(71) Applicant: SAMSUNG SDI CO., LTD., Yongin-si, Gyeonggi-do 17084 (KR)
(72) Inventor: PARK, Junmo, 17084 Yongin-si (KR)
(74) Representative: Marks & Clerk LLP

(57) **Abstract**

A secondary battery module includes a battery cell including terminals and a vent, a vent potting plate including a base plate configured to cover at least the vent of the battery cell and a potting material accommodation portion provided on the base plate and located at a position corresponding to a position of the vent of the battery cell.

## Description

### FIELD

The present disclosure relates to a secondary battery module with a vent potting portion of a battery cell and a method of manufacturing the same.

### BACKGROUND

Different from primary batteries that are not designed to be charged, secondary batteries are designed to be discharged and recharged. A secondary battery broadly includes an electrode assembly formed of a positive electrode plate, a separator, and a negative electrode plate, a case (or can) accommodating the electrode assembly, and a cap assembly with an external terminal capable of connecting the electrode assembly to an external power source or a load.

A vent included in the secondary battery ruptures when an event such as a fire or explosion occurs inside the cell and serves to discharge a flame and gas to the outside. Potting may be performed on the vent to prevent thermal propagation due to a flame or gas discharged through the vent when such an event occurs and to protect a cell vent from debris discharged through the vent.

The herein information disclosed in this Background section is for enhancement of understanding of the background of the present disclosure, and therefore, it may contain information that does not constitute a related (or prior) art.

### SUMMARY

The present disclosure is directed to providing an improved method of potting a vent of a secondary battery cell.

According to an aspect of the present disclosure, there is provided a secondary battery module with a vent potting plate, which includes a battery cell including terminals and a vent, and a vent potting plate including a base plate configured to cover at least the vent of the battery cell and a potting material accommodation portion provided on the base plate and located at a position corresponding to a position of the vent of the battery cell.

According to an aspect of the present disclosure, there is provided a method of manufacturing a secondary battery module, which includes providing a battery cell including terminals and a vent, providing a vent potting plate comprising a base plate configured to cover at least the vent of the battery cell and a potting material accommodation portion provided on the base plate and located at a position corresponding to a position of the vent of the battery, applying and curing a potting material to the potting material accommodation portion of the vent potting plate, and covering the vent potting plate above at least the vent of the battery cell.

The potting material accommodation portion of the vent potting plate may comprise: a bottom portion located above the vent of the battery cell; and a boundary wall formed around the bottom portion to have a level higher than that of the bottom, wherein a potting material is accommodated in a space formed by the boundary wall and the bottom portion.

The method may further comprise electrically connecting the terminals and a bus bar of the battery cell.

According to an aspect of the present disclosure, there is provided a vent potting plate of a secondary battery module, which includes a base plate configured to cover a battery cell including a terminal and a vent, and a potting material accommodation portion located at a position corresponding to a position of the vent of the battery cell.

In some embodiments of the present disclosure, the potting material accommodation portion of the vent potting plate includes a bottom portion located above the vent included in the battery cell, and a boundary wall formed around the bottom portion to have a level higher than that of the bottom, wherein a potting material may be accommodated in a space formed by the boundary wall and the bottom portion.

In some embodiments of the present disclosure, the vent potting plate may further include a bus bar electrically connected to the terminals of the battery cell. In addition, the vent potting plate may further include an external connection conductor electrically connected to the bus bar.

In some embodiments, the vent potting plate may be a bus bar holder to which the bus bar of the secondary battery module and the external connection conductor are fixed.

A thickness of the bottom portion may range from 0.05 mm to 0.15 mm.

The bottom portion may include a solid plate.

The bottom portion may include a perforated plate.

The bottom portion of the potting material accommodation portion may be located at a position with a spacing with a surface of the vent included in the battery cell.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a top perspective view illustrating a prismatic secondary battery;
FIG. 2 is a cross-sectional view along I-I' of FIG. 1;
FIG. 3 is a perspective view illustrating a module in which secondary battery cells are disposed;
FIG. 4 is a perspective view illustrating a secondary battery module and a vent potting plate applied to the secondary battery module according to some embodiments of the present disclosure;
FIG. 5 is a perspective view illustrating a vent potting plate attached to an array of battery cells;
FIG. 6 is a plan view;
FIG. 7 is a front view;
FIG. 8 is a cross-sectional view taken longitudinally of one of the battery cells for describing a configuration of a potting material accommodation portion;
FIG. 9 is an enlarged view illustrating portion A of FIG. 8;
FIG. 10 is a side view of FIG. 9 that shows a potting material accommodated in the potting material accommodation portion;
FIG. 11 is a diagram illustrating a potting material accommodation portion according to some other embodiments of the present disclosure;
FIG. 12 shows an example in which a bus bar and an external connection conductor are attached to a vent potting plate 200;
FIG. 13 is an example diagram illustrating a secondary battery pack including the secondary battery module shown in FIG. 12; and
FIG. 14 is a diagram illustrating a vehicle in which the secondary battery pack shown in FIG. 13 is installed.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. Therefore, the embodiments described in the present disclosure and the configurations illustrated in the drawings are merely the example embodiments of the present disclosure, and do not represent all the technical scope of the present disclosure, so that it should be understood that various equivalents and modifications, which are capable of replacing the embodiments and the configurations, are possible at the time of filing the present application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In addition, in order to facilitate understanding of the present disclosure, the accompanying drawings are not drawn to scale and the dimensions of some components may be exaggerated. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

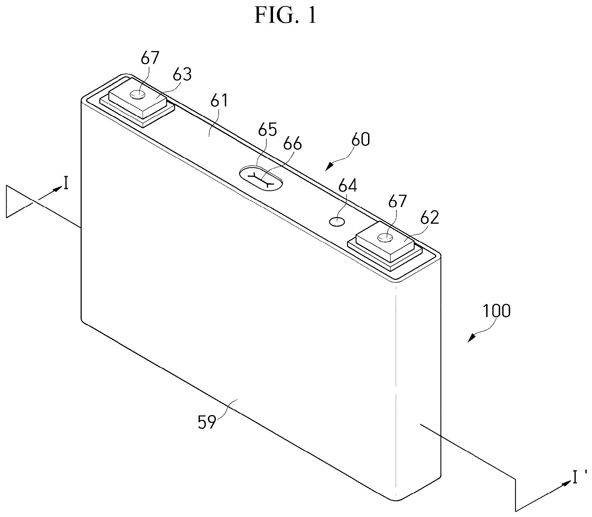

FIG. 1 is a top perspective view of a prismatic secondary battery, according to some embodiments of the present disclosure.

A case 59 defines an overall appearance of the prismatic secondary battery, and may be made of a conductive metal, such as aluminum, aluminum alloy, or nickel-plated steel. In addition, the case 59 may provide a space for accommodating an electrode assembly therein.

A cap assembly 60 may include a cap plate 61 that covers the opening of the case 59. In some examples, the case 59 and the cap plate 61 may be made of a conductive material. Here, a first terminal 63 and a second terminal 62 may be electrically connected to respective positive and negative (or negative and positive) electrodes inside the case, and may be installed to protrude outward through the cap plate 61.

The cap plate 61 may be equipped with an electrolyte injection port 64 formed to install a sealing plug (or seal pin) and a vent 66 installed at a gas discharging hole 65. The vent 66 is for discharging gas generated inside the secondary battery.

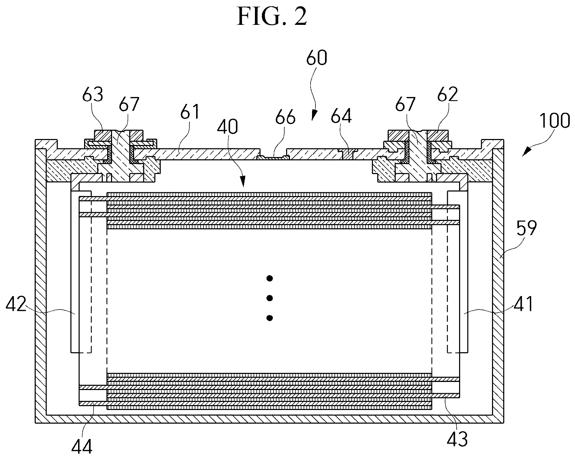

FIG. 2 is a cross-sectional view taken along the line I-I' of FIG. 1, according to some embodiments of the present disclosure.

As shown in FIG. 2, a prismatic secondary battery may include an electrode assembly 40, a first current collector 41, a first terminal 62, a second current collector 42, a second terminal 63, a case 59, and a cap assembly 60.

The electrode assembly 40 may be formed by winding or stacking a stack of a first electrode plate, a separator, and a second electrode plate, which are formed as thin plates or films. When the electrode assembly 40 is a wound stack, a winding axis may be parallel to the longitudinal direction of the case 59. In some embodiments, the electrode assembly 40 is a stack type rather than a winding type, and the shape of the electrode assembly 40 is not limited in the present disclosure. In addition, the electrode assembly 40 may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like.

The first electrode plate may include a first electrode tab 43 (e.g., a first uncoated portion) that is a region to which the first electrode active material is not applied. The first electrode tab 43 may act as a current flow path between the first electrode plate and the first current collector 41. In some embodiments, when the first electrode plate is manufactured, the first electrode tab 43 is formed by being cut in advance to protrude to one side of the electrode assembly 40, or the first electrode tab 43 protrudes to one side of the electrode assembly 40 more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 44 (e.g., a second uncoated portion) that is a region to which the second electrode active material is not applied. The second electrode tab 44 may act as a current flow path between the second electrode plate and the second current collector 42. In some embodiments, the second electrode tab 44 may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like.

In some embodiments, the electrode assembly 40 is accommodated in the case 10 along with an electrolyte.

In the electrode assembly 40, the first current collector 41 and the second current collector 42 may be welded and connected to the first electrode tab 43 extending from the first electrode plate and the second electrode tab 44 extending from the second electrode plate, respectively. As mentioned herein, in some embodiments in which the first electrode tab 43 and the second electrode tab 44 are located at the top of the electrode assembly 40, the first and second current collectors are located at the top of the electrode assembly 40.

As illustrated in FIG. 2, the first current collector 41 and the second current collector 42 are connected to the first terminal 62 and the second terminal 63 through connection members 67, respectively. In some embodiments, the connection members 67 may each have an outer peripheral surface that is threaded, and may be fastened to the first terminal 62 and the second terminal 63 by screwing. However, the present disclosure is not limited thereto. For example, the connection members 67 may also be coupled to the first terminal 62 and the second terminal 63 by riveting or welding.

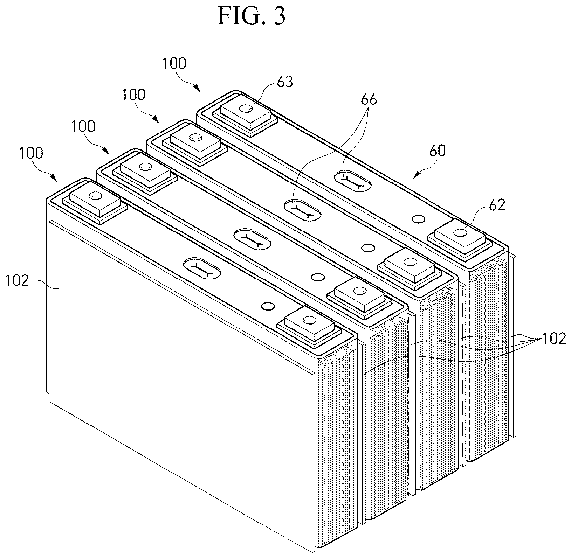

FIG. 3 is a perspective view of a module in which secondary battery cells 100 are disposed.

In accordance with an increase in energy capacity for driving electric vehicles, a secondary battery module is manufactured by arranging and connecting a plurality of secondary battery cells in a lateral and/or longitudinal direction. A plurality of cells 100 may be horizontally disposed and/or stacked vertically in a space formed by a pair of facing end plates (not shown) and a pair of facing side plates (not shown). The form of arrangement and stacking of secondary batteries may be designed to obtain desired voltage and current specifications.

In FIG. 3, a housing, an end plate, and a side plate, which are required for arranging the plurality of cells 100, are not shown. Among six surfaces of a hexahedral case, which is an exterior material of each battery cell 100, a surface on which a cap assembly 60, where first and second terminals 62, 63 and a vent 66 are assembled, is positioned is referred to as a top surface, and a surface opposite to the top surface is referred to as a bottom surface.

Insulators 102 may be inserted between the horizontally disposed cells 100. These insulators 102 may perform both thermal and electrical insulating functions and thus may be manufactured of materials with both a heat insulating property and an electrical insulating property. In addition, the insulator 120 may be made of an elastic material to absorb an expansion force when each cell expands (swells).

The vent 66 ruptures when an event such as a fire or explosion occurs inside the cell and serves to discharge a flame and gas to the outside. Potting may be performed on the vent 66 to prevent thermal propagation due to a flame or gas discharged through the vent 66 when such an event occurs and to protect a cell vent from debris discharged through the vent 66. During the potting, when a worker manually performs potting on the vent 66 of each of the plurality of battery cells, the work is very inefficient and it is difficult to control and manage an application amount of potting liquid. When the application amount of potting liquid may be controlled in an automated process line and the potting liquid may be applied to each battery cell at the same time, a production speed can be significantly increased and a potting result with a uniform application amount can be obtained.

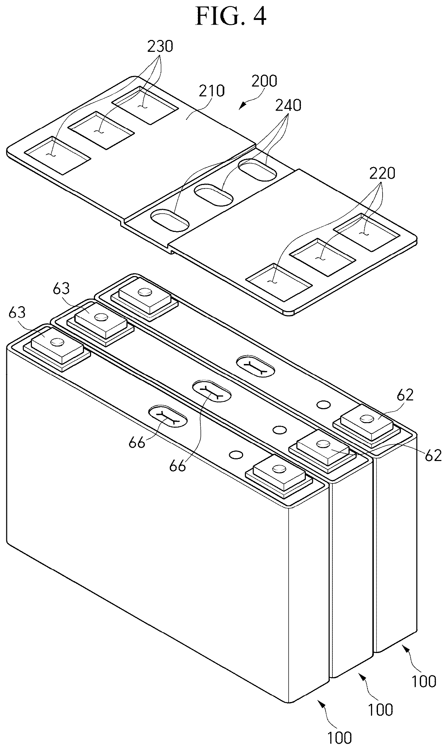

FIG. 4 is an exploded perspective view of the secondary battery module in which a vent potting plate 200 is coupled to the secondary battery module as shown in FIG. 3.

The vent potting plate 200 may include a base plate 210 configured to cover a cap assembly 60 of the battery cell 100 below the base plate 210, and potting material accommodation portions 240 located on the base plate 210 at positions corresponding to positions of the vents 66 of the battery cell 100. A potting liquid may be applied and cured through an automated process to the potting material accommodation portions 240 provided according to the number of battery cells 100 on the vent potting plate 200, and the vent potting plate 200 may be attached to the top surface of the battery cell 100.

In the vent potting plate 200 show in FIG. 4, openings 220 and 230 may be formed to expose the terminals 62 and 63 of the battery cell 100 in order to connect the terminals 62 and 63 to a bus bar (which will be described in detail herein.

The vent potting plate 200 may be made of a synthetic resin, but the present disclosure is not limited thereto. Alternatively, the vent potting plate 200 may be implemented as a bus bar holder including a bus bar and a connectors which are used in the production of the secondary battery module, but the present disclosure is not limited thereto.

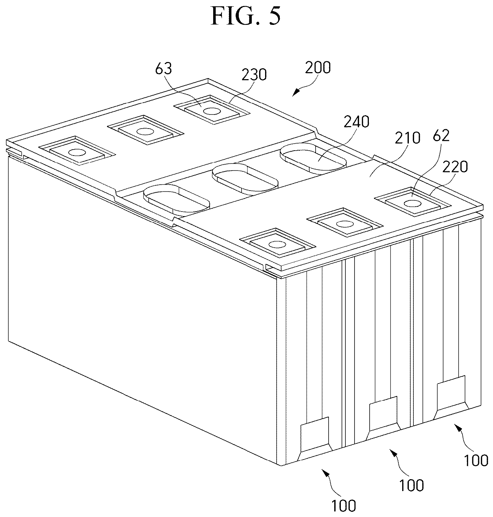

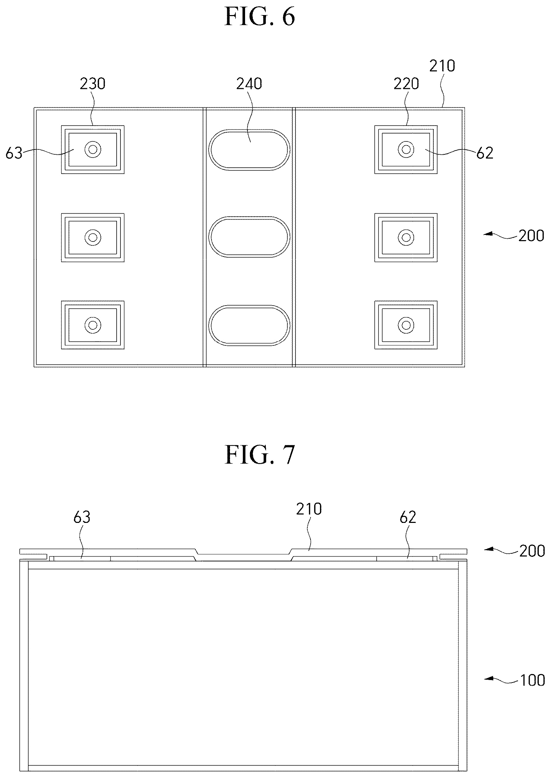

FIG. 5 is a perspective view illustrating the vent potting plate 200 attached to an array of the battery cells 100, FIG. 6 is a plan view, and FIG. 7 is a front view.

These drawings show that the potting material accommodation portion 240 is located above the vent 66 of each battery cell 100, and the terminals 62 and 63 of each battery cell 100 are exposed through the openings 220 and 230 formed in the base plate 210 of the vent potting plate 200. A secondary battery module or pack may be manufactured by connecting a bus bar (not shown) to the exposed terminals 62 and 63.

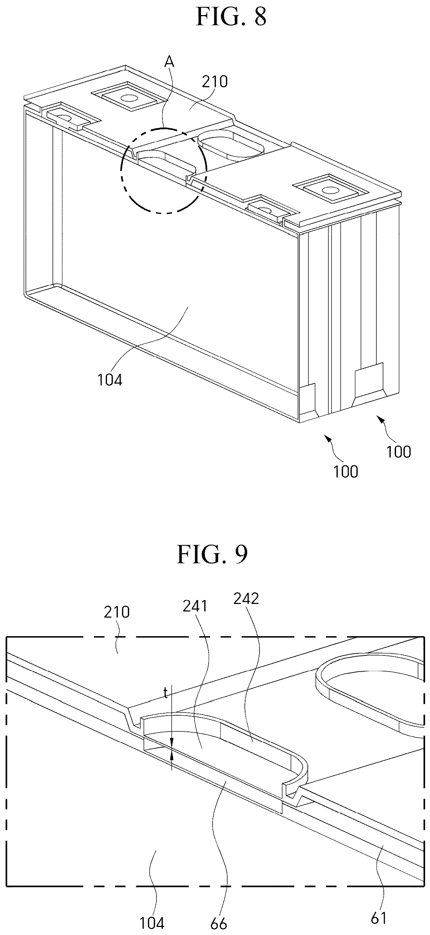

FIG. 8 is a cross-sectional view taken longitudinally of one of the battery cells 100 for describing a configuration of the potting material accommodation portion 240, and FIG. 9 is an enlarged view illustrating portion A of FIG. 8. Internal structures of the cut battery cell 100 are not shown in FIGS. 8 and 9, and only an internal space is indicated as reference numeral 104.

Referring to FIG. 9, the potting material accommodation portion 240 (see FIG. 5) may include a bottom 241 which is located above the vent 66 provided in the cap plate 61 of the cap assembly of the battery cell 100 and on which a potting liquid is applied, and a boundary wall 242 formed around the bottom 241 to be higher than a bottom level of the bottom 241 to serve as a boundary of a region where the potting liquid is applied. In this way, the potting liquid may be accommodated in a space formed by the boundary wall 242 and the bottom 241.

Referring to FIG. 9, it can be seen that the bottom 241 is located at a position with a spacing with an upper surface of the vent 66 provided in the cap plate 61 of the battery cell 100. This is to prevent the bottom 241 from interfering with the vent 66 rupturing when an event occurs in the battery cell 100. In FIG. 9, the spacing substantially corresponds to a thickness of the cap plate 61. However, the present disclosure is not limited thereto.

A thickness t of the bottom 241 ranges from 0.05 mm to 0.15 mm, and in some embodiments, the thickness t may be 0.1 mm. The thickness of the bottom 241 may be determined within a range in which the bottom 241 may be easily melted or destroyed by heat and an impact generated when the vent 66 ruptures.

The bottom 241 may be made of a solid plate. The bottom 241 may be formed integrally with the base plate 210 or the boundary wall 242, but the present disclosure is not limited thereto. For example, the base plate 210 and bottom 241 may be manufactured separately from different or similar materials, and then the bottom 241 may be assembled with the base plate 210. Alternatively, when the base plate 210 is molded, a separately manufactured bottom 241 may be inserted to complete the base plate 210 using insert injection molding.

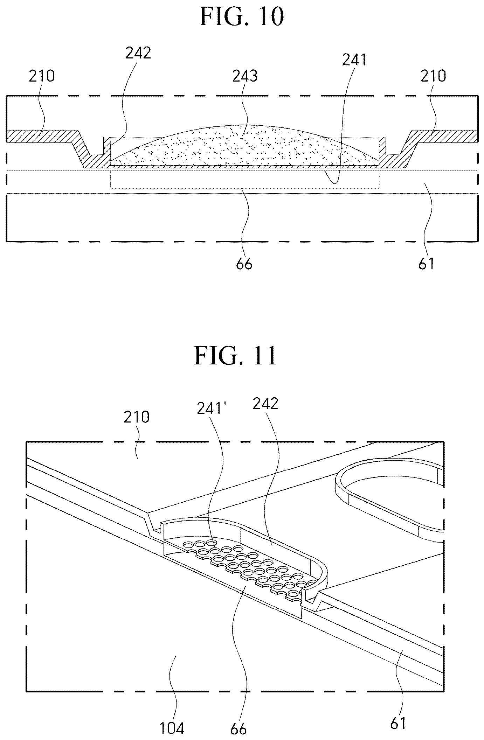

FIG. 10 shows a side view of FIG. 9. FIG. 10 shows a potting material 243 accommodated in the potting material accommodation portion 240. Since the components described in FIG. 9 are shown in FIG. 10, duplicate description thereof will be omitted. The potting material 243 is applied onto the bottom 241 of the potting material accommodation portion 240 in a liquid phase and then cured.

FIG. 11 is a diagram illustrating a potting material accommodation portion according to some other embodiments of the present disclosure. In embodiments, a bottom 241' is implemented as a perforated plate. Since the bottom 241 is implemented as a perforated plate, the bottom 241 may communicate more closely with the vent 66 of the battery cell 100 located below the bottom 241. For example, the bottom may be melted or be destroyed more easily by heat when the vent 66 ruptures.

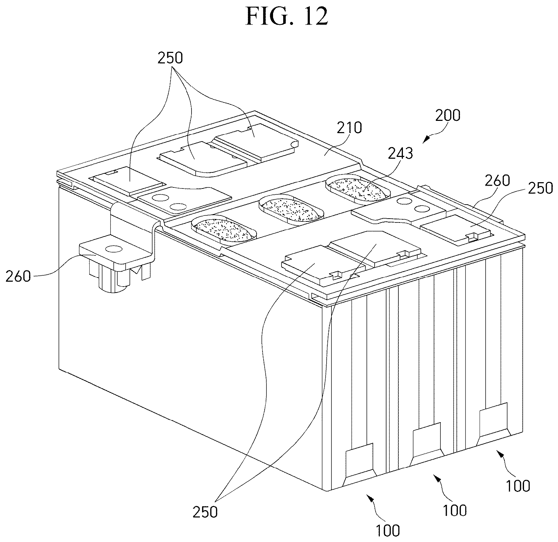

FIG. 12 shows an example in which a bus bar and an external connection conductor are attached to the vent potting plate 200.

As described herein, the potting material 243 is applied to the potting liquid accommodation portion 240 and cured, and a bus bar 250 is attached to the base plate 210. The bus bar 250 is electrically connected to the battery cell terminals 62 and 63 of FIG. 5 located below the base plate 210. In addition, an external connection conductor 260 is electrically connected to the bus bar 250.

In this way, when the bus bar and the external connection conductor are attached to the vent potting plate 200, the vent potting plate 200 may function as a bus bar holder assembly for the secondary battery module. Conversely, the vent potting plate 200 of the present disclosure may be realized by including the potting liquid accommodation portion 240 described above in the bus bar holder assembly for the secondary battery module.

A method of manufacturing the herein-described vent potting plate 200 will be described. The method of manufacturing a vent potting plate according to some embodiments of the present disclosure includes providing the battery cell 100 with the cap assembly 60 including the terminal 62 and the vent 66, providing the vent potting plate 200 including the base plate 210 configured to cover the cap assembly 60 of the battery cell and the potting material accommodation portion 240 provided on the base plate 210 and located at a position corresponding to a position of the vent 66 of the battery cell, applying and curing a potting material to the potting material accommodation portion 240 of the vent potting plate 200, and covering the vent potting plate 200 above the cap assembly 60 of the battery cell 100.

In the providing of the vent potting plate 200, the potting material accommodation portion 240 includes the bottom 241 located above the vent included in the cap assembly 60 of the above battery cell 100, and the boundary wall 242 formed around the bottom 241 to have a level higher than that of the bottom 241, and the potting material may be accommodated in a space formed by the boundary wall 242 and the bottom 241.

The method of manufacturing a vent potting plate according to some embodiments of the present disclosure further includes electrically connecting the terminals and the bus bar of the battery cell 100, and fixing the bus bar connected to the terminals to the vent potting plate 200.

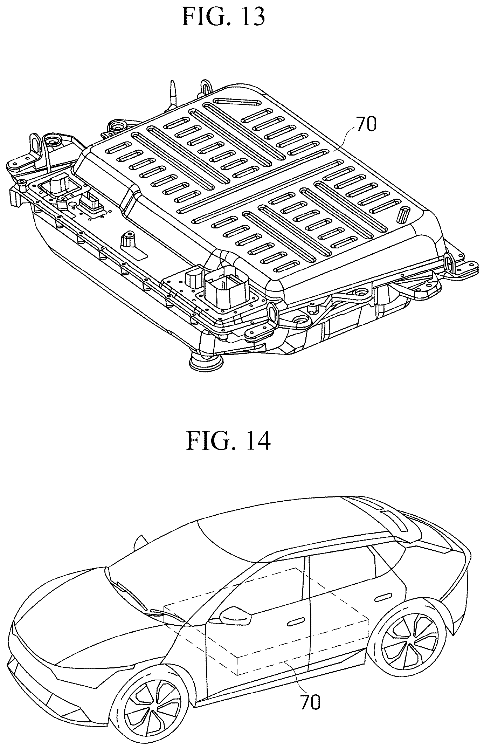

FIG. 13 is a perspective view of a battery pack 70 according to embodiments of the present disclosure. The battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle but is not limited thereto. FIG. 13 shows a vehicle that includes the battery pack 70 shown in FIG. 12 on the lower body thereof. The vehicle may operate by (e.g., may be powered by) receiving power from the battery pack 70.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}G_{c}O₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

According to the present disclosure, when potting is performed on a cell vent during the manufacture of a secondary battery module, a potting liquid can be applied and cured for each battery cell at the same time in an automated process line, thereby significantly increasing a production speed, obtaining a potting result with a uniform application amount, and easily managing the application amount according to the automated process.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. A vent potting plate of a secondary battery module, comprising:
a base plate configured to cover a battery cell including a terminal and a vent; and
a potting material accommodation portion located at a position corresponding to a position of the vent of the battery cell.

2. The vent potting plate as claimed in claim 1, wherein the potting material accommodation portion of the vent potting plate comprises:
a bottom portion located above the vent included in the battery cell; and
a boundary wall formed around the bottom portion to have a level higher than that of the bottom portion,
wherein a potting material is accommodated in a space formed by the boundary wall and the bottom portion.

3. The vent potting plate as claimed in claim 2, wherein a thickness of the bottom portion ranges from 0.05 mm to 0.15 mm.

4. The vent potting plate as claimed in claim 2 or 3, wherein the bottom portion includes or takes the form of a solid plate.

5. The vent potting plate as claimed in claim 2 or 3, wherein the bottom portion includes or takes the form of a perforated plate.

6. The vent potting plate as claimed in any one of claims 2 to 5, wherein the bottom portion of the potting material accommodation portion is located at a position with a spacing with a surface of the vent included in the battery cell.

7. The vent potting plate as claimed in any preceding claim, wherein the vent potting plate further comprises a bus bar electrically connected to the terminals of the battery cell.

8. The vent potting plate as claimed in claim 7, wherein the vent potting plate further comprises an external connection conductor electrically connected to the bus bar.

9. The vent potting plate as claimed in any preceding claim, wherein the vent potting plate includes or takes the form of a bus bar holder for the secondary battery module.

10. A secondary battery module comprising:
a battery cell comprising terminals and a vent; and
the vent potting plate according to any preceding claim.

11. A method of manufacturing a secondary battery module, comprising:
providing a battery cell including terminals and a vent;
providing a vent potting plate comprising a base plate configured to cover at least the vent of the battery cell and a potting material accommodation portion provided on the base plate and located at a position corresponding to a position of the vent of the battery;
applying and curing a potting material to the potting material accommodation portion of the vent potting plate; and
covering the vent potting plate above at least the vent of the battery cell.

12. The method as claimed in claim 11, wherein the potting material accommodation portion of the vent potting plate comprises:
a bottom portion located above the vent of the battery cell; and
a boundary wall formed around the bottom portion to have a level higher than that of the bottom,
wherein a potting material is accommodated in a space formed by the boundary wall and the bottom portion.

13. The method as claimed in claim 11 or 12, further comprising electrically connecting the terminals and a bus bar of the battery cell.
